# EUROPEAN PATENT APPLICATION

(11) **EP 3 026 462 A1**
(43) Date of publication of application: **01.06.2016**
(21) Application number: 15460105.8
(22) Date of filing: 21.11.2015
(51) Int. Cl.: G01S 19/21, G01S 19/36

(54) **THE METHOD OF REMOVING INTERFERENCE, AND CIRCUIT FOR REMOVING INTERFERENCE IN THE GNSS SYSTEM**

(30) Priority: 21.11.2014 PL 41020914
(71) Applicant: Akademia Marynarki Wojennej, 81-103 Gdynia (PL)
(72) Inventor: Felski, Andrzej, 81-113 Gdynia (PL)
(74) Representative: Czabajski, Jacek

(57) **Abstract**

The invention relates to the method of removing interference, and the circuit for removing interference in the GNSS system. In the circuit according to the invention navigation parameters are determined from at least three receiving channels of which each comprises an antenna and a multi-channel receiving and processing device (4), (5) and (6), respectively. Signals carriers of navigation parameters from the outputs of the receiving and processing devices are routed into the inputs of a navigation processor (7) where they are concurrently and simultaneously analysed and compared, and once it is found that navigation parameters from one of the channels are distorted, this channels is temporarily removed. The antennae of receiving devices are grouped locally in the delineation of a circle proportionally to their quantity, vertically, slightly deflected from the vertical, with the upper edge towards the centre of a circle. The subject of the invention is intended for the construction of safe navigation satellite systems with a particular emphasis on facilities and means of transport air, but also sea and road transport means, both permanent and moving.

## Description

The invention relates to the method of removing interference, and the circuit for removing interference in the GNSS system.

The area of application of the subject of the invention is widely understood land, air and sea transport in terms of both precise determination of a geographical position in three dimensions and movement parameters, as well as, in particular, the removal of possible interference that may result in the generation of false navigation information.

In fact, GNSS- Global Navigation Satellite System - is currently under construction. However, it has already been established that it will work on the basis of other existing navigation satellite systems - GPS Navstar, GLONASS and, also once it is constructed and launched - GALILEO. A characteristic feature of all currently operating navigation satellite systems is that the level of the radio signal emitted by navigation satellites, received at any point on the Earth's surface, is lower than the level of natural radio electronic noise by 159 to 163 decibels. Receiving antennae of modern satellite navigation devices are, in principle, nondirectional in the horizontal plane, covering almost the entire upper hemisphere so that they are able to receive and decode a radio signal from satellites, the position of which in relation to the axis of the zenith of an antenna of a GNSS receiving device forms an angle of not more than 80 +/- 10 degrees. Due to the particular characteristics of radio signals emitted from satellites of navigation systems, they were until recently believed to be safe and impossible to be interfered. The experience of the last few years has proven that the previous beliefs were mistaken. Now, there is a whole range of freely available low power transmitting radio devices emitting a noise radio signal with a broad frequency spectrum, including the band of satellite navigation signals - capable of blocking a useful signal from satellites - the process called JAMMING. The possession of such devices, and trade in them is not virtually prohibited anywhere in the world, due to the fact that the signal power of a very high frequency does not exceed the value of 10 milliwatts ERP. However, the of use of this type of devices is prohibited by law, because the activation of such a transmitter, for example, on the bus or on board an aircraft, can effectively block an on-board satellite navigation receiving device, or significantly reduce the accuracy of determination of navigation parameters. Observations carried out in many countries show, however, that this prohibition is generally not respected.

There have already also been incidental cases of interference of the work of satellite navigation receiving devices by devices emitting a radio signal identical to that from a satellite containing false signals called - SPOOFING. As a result a receiver is "deceived" by such a device, so that it will generate false navigation information. Devices that generate both JAMMING and SPOOFING signals generate signals, as regards strength, at a higher level than signals from satellites with the consequence that a receiving device of satellite navigation will process a stronger signal containing a false signal or only noise, and this will block the device.

A typical receiving device of a navigation satellite system comprises a single passive or possibly active antenna, a receiver and a navigation information display device relevant for the needs of the user. The receiver itself is usually multi-channel, which means that it processes signals received from a single receiving antenna, from many satellites in a quasi-simultaneous mode. In practice, contemporary receivers are able to handle from 12 to 24 channels, or sometimes even 72. All navigation satellites emit exactly the same radio signal differing from one another only in a different identification code. There are also complex satellite navigation receiving devices comprising 4 independent antennae and the same number of independent receivers combined with them. Antennae in these devices are arranged at the tops of the diagonals of a square or a rhombus or a rectangle. The purpose of such complex receiver units is mainly to determine the respective location of antennae of a set, which provides the basis for determining the spatial orientation of the facility on which they are installed. This kind of solutions are commonly used on special purpose vessels to support on-board positioning devices on ships carrying out research work in the field of exploration of the seabed and on ships supporting the construction of turbine towers of wind power plants. The uses of similar solutions are also known in aviation.

Currently, commercially used satellite navigation receiving devices are devoid of technical solutions that protect them from the effect of SPOOFING and JAMMING interfering signals. Devices dedicated to special applications, including military is an exception, but their design is specially protected and their behaviour during the effect of interfering signals is not known.

The method of removing interference and the circuit for removing interference, in the part relating to the method of removing interference involves the determination of navigation parameters by at least three independent receiving devices grouped locally, covering by its antenna characteristics sectors with such a calculation that they altogether include the entire upper hemisphere, with a concurrent and simultaneous analysis of their indications, and once it is found that one of the devices gives parameters different from other indications - this information is immediately ignored in the operation process of the navigation processor and navigation data exposure is performed using the parameters given by other devices.

An antenna set of the device comprises at least three antennae arranged symmetrically in the horizontal plane and at a certain angle to the vertical direction. In the part relating to a device for removing interference in the GNSS, a single receiving and processing device is replaced by a device provided with at least three simultaneously operating receiving devices of a satellite navigation system. The antennae of these devices are proportionally arranged in the delineation of a full circle, wherein they are oriented to the direction in such a manner that their symmetry axes are deflected from the axis of the zenith by an angle of 10 to 15 degrees, and in the horizontal plane by an angle proportional to their quantity. With this arrangement the total antenna characteristics of the unit ensures the reception of signals from the entire upper hemisphere, and at the same disabling of one radio channel makes it possible to eliminate the reception of signals from a certain sector (in the case of three antennae - 60 degrees in the horizontal plane), and thus eliminate signals causing interference while providing the sufficient number of measurements to ensure determination of navigation parameters.

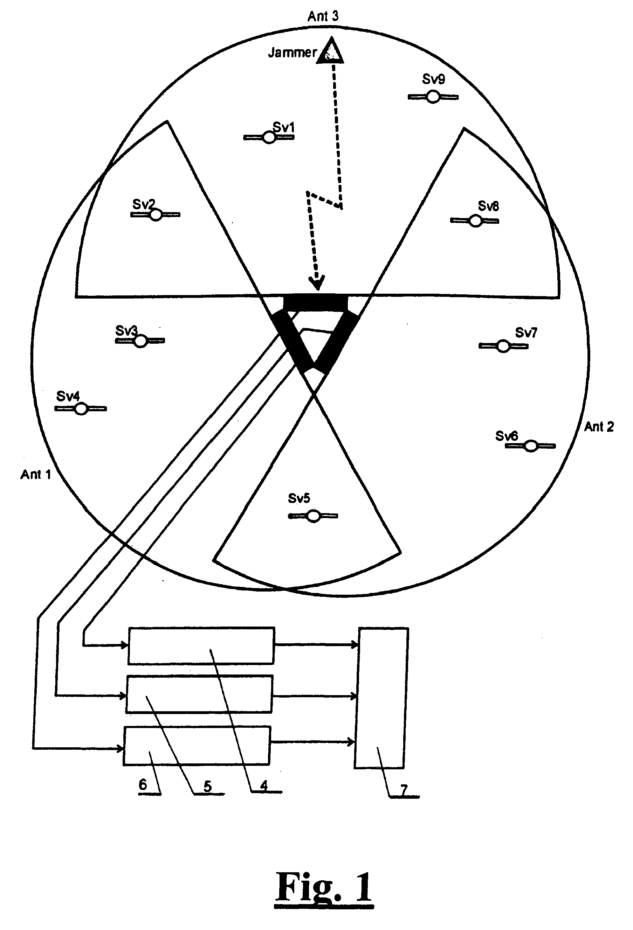

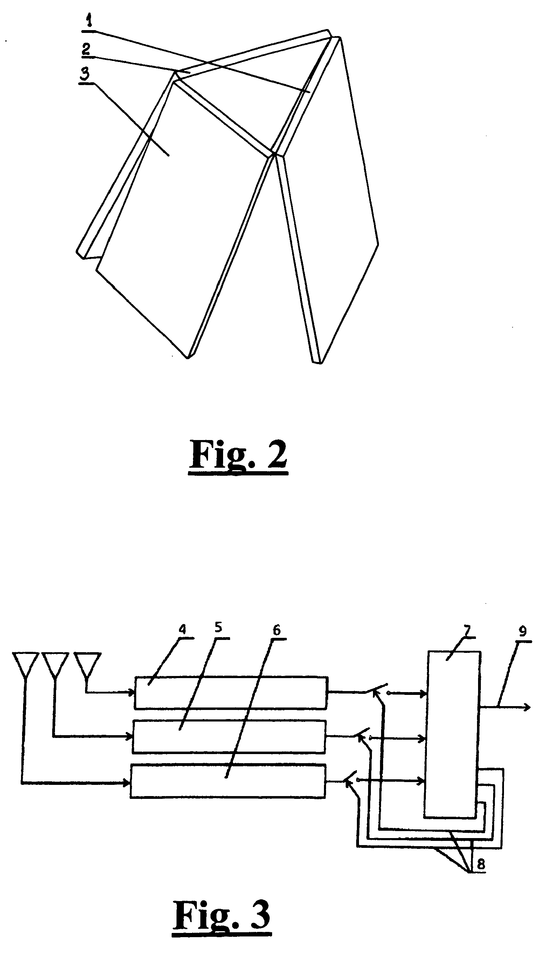

The subject of the invention is shown in the embodiment in the drawings. In Fig. 1 - a functional diagram of the method for removing interference, in FIG. 2 - a diagram of the installation of the GNSS receiving antenna arrangement and in FIG. 3 - a block diagram of the circuit for removing interference.

The subject of the invention in the embodiment, in the part relating to the method, is implemented as follows. In the geographical area where an object navigates, hypothetically in the reception area a signal is available from nine navigation satellites and from one JAMMING interference signal source. An antenna 1 along with a supporting receiving device 4 decodes and processes navigation information from satellites Sv2, Sv3, Sv4 and Sv5. An antenna 2 with a device 5 from: Sv5, Sv6, Sv7 and Sv8, respectively. An antenna 3 with a device 6 from: Sv8, Sv9, Sv1, Sv2, respectively, and a JAMMING interference signal. A control and processing device - a navigation processor 7 continuously analyses and processes navigation information from the devices 4, 5, and 6, and when navigation information from one of the receiving channels is clearly different from that obtained from the other, this channel is removed until the data received from it is consistent with that obtained from the other. In the case of a typical solution of a navigation satellite system with a single antenna and a multi-channel receiver, navigation parameters will be displayed taking into account all signals received from satellites, also taking into account an interference signal - therefore, the navigation parameters obtained will be erroneous with the scale of the error which cannot be quickly assessed.

In the part relating to the circuit of the subject of the invention, the antennae 1, 2 and 3 are proportionally arranged in the delineation of a circle, deflected from the vertical by an angle of 15 degrees from the zenith to the centre of the circle. The antennae are connected to the inputs of the receiving and processing devices: 4, 5 and 6, respectively. The outputs of the devices are connected through connecting/disconnecting keys to the inputs of the navigation processor 7 which, if a JAMMING or SPOOFING interference signal is detected, through control lines 8, disconnects transmission from a channel showing errors in processing. The transmission of navigation parameters, free from interference, is provided through a feeder 9 to navigation display devices.

The method and circuit for removing interference in the GNSS according to the invention allow the high reliability of presented navigation parameters to be obtained. The number of three receiving channels is a minimum for the subject of the invention making it possible to achieve the objective to be reached by the solution. A bigger number of receiving channels will significantly increase the reliability of generated navigation parameters.

## Claims

1. The method of removing interference in the GNNS involving filtering of foreign signals, **characterised in that** the navigation parameters created in the GNSS are determined from at least three receiving channels containing receiving antennae (1), (2) and (3), respectively, coupled with multi-channel receiving and processing devices (4), (5) and (6), respectively, wherein the antennae (1), (2) and (3) are grouped locally so as to altogether cover the entire upper hemisphere, whereas navigation parameters obtained from all receiving channels are concurrently simultaneously analysed, and once it is found that from one of the receiving channels the relevant navigation parameters are significantly different from those obtained from the other receiving channels, it is temporarily removed from the process of determination of navigation parameters.

2. The circuit for removing interference in the GNSS containing receiving devices of the navigation satellite system, **characterised in that** a set of at least three antennae (1), (2) and (3) arranged symmetrically in the horizontal plane and deflected to the vertical direction, is connected to the inputs of the receiving and processing devices (4), (5) and (6), respectively, from the outputs of which the signals of navigation parameters are fed, through connecting/disconnecting keys, to the inputs of a navigation processor (7) provided with the input of a signal feeder (9) for display devices and with the inputs (8) of signals controlling keys connecting/disconnecting receiving channels in the signal of which the navigation processor (7) has decoded interfered and distorted navigation parameters.
